(19) Europäisches Patentamt / European Patent Office / Office européen des brevets

(11) **EP 3 746 412 B1**

## (12) FASCICULE DE BREVET EUROPEEN

(45) Date de publication et mention
de la délivrance du brevet:
**17.04.2024 Bulletin 2024/16**

(21) Numéro de dépôt: **19707860.3**

(22) Date de dépôt: **29.01.2019**

(51) Classification Internationale des Brevets (IPC):
**C03B 18/06** *(2006.01)* **B32B 17/10** *(2006.01)*
**G02B 27/01** *(2006.01)*

(52) Classification Coopérative des Brevets (CPC):
**C03B 18/06; B32B 17/10036; B32B 17/10082;**
B32B 2309/105; G02B 2027/013

(86) Numéro de dépôt international:
**PCT/FR2019/050205**

(87) Numéro de publication internationale:
**WO 2019/150044 (08.08.2019 Gazette 2019/32)**

(54) **FABRICATION DE VERRE A COIN DANS LA DIRECTION LONGITUDINALE D'UNE INSTALLATION DE FABRICATION DE VERRE PAR FLOTTAGE**

HERSTELLUNG VON GLAS MIT KEILFÖRMIGEM LÄNGSSCHNITT IN EINER FLOATGLASHERSTELLUNGSANLAGE

PRODUCTION OF GLASS HAVING A WEDGE-SHAPED LONGITUDINAL-SECTION IN A FLOAT GLASS PRODUCTION FACILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.01.2018 FR 1850730**

(43) Date de publication de la demande:
**09.12.2020 Bulletin 2020/50**

(73) Titulaire: **SAINT-GOBAIN GLASS FRANCE**
**92400 Courbevoie (FR)**

(72) Inventeurs:
• **GUERING, Paul-Henri**
**75013 PARIS (FR)**
• **BACH, Emmanuel**
**92120 MONTROUGE (FR)**

(74) Mandataire: **Saint-Gobain Recherche**
**B.P. 135**
**39, quai Lucien Lefranc**
**93303 Aubervilliers Cedex (FR)**

(56) Documents cités:
**JP-A- 2017 105 665    US-A1- 2015 251 377**

• **NOVIKOV M A ET AL: "OPTICAL INTERFERENCE SYSTEM FOR CONTROLLING FLOAT-GLASS RIBBON THICKNESS AT HOT STAGES OF PRODUCTION", GLASS AND CERAMICS, SPRINGER, NEW YORK, NY, US, vol. 61, no. 1/02, 1 janvier 2004 (2004-01-01), pages 37-41, XP001198757, ISSN: 0361-7610, DOI: 10.1023/B:GLAC.0000026770.45136.34**

## Description

La présente invention concerne un procédé de fabrication de verre à coin par flottage d'un ruban de verre sur un bain de métal fondu. La présente invention concerne de plus le verre à coin obtenu par un tel procédé, ainsi qu'un parebrise feuilleté présentant un angle d'amincissement prédéterminé et destiné à être utilisé comme réflecteur dans un système d'affichage tête haute, système également nommé « Head-Up Display (HUD) » en langue anglaise. Sont également concernés un système de contrôle d'un tel procédé de fabrication, ainsi que le programme d'ordinateurs et le support d'enregistrement informatique associés.

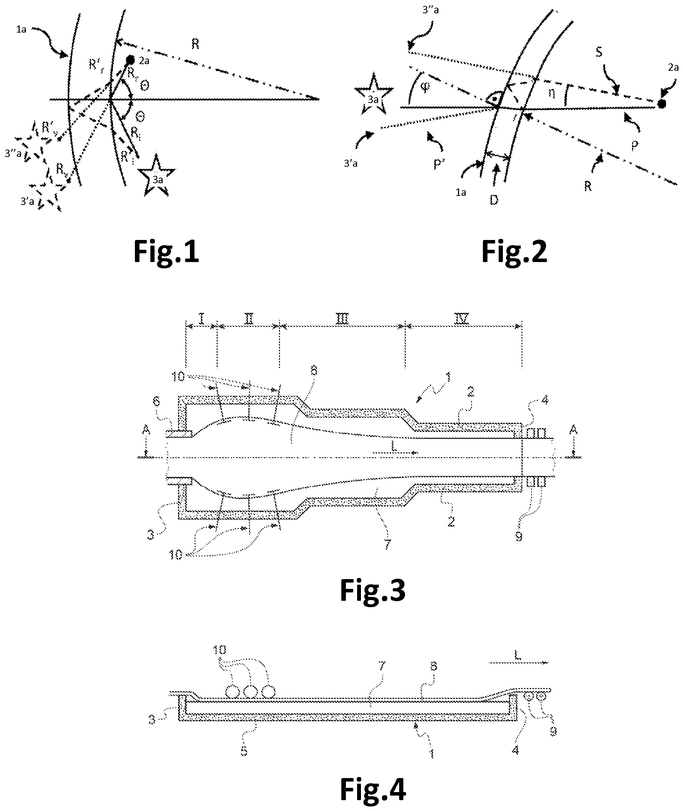

L'état de la technique, dont le document brevet US2016/0291324A1, décrit un système connu de HUD. Dans ce contexte, il est connu que les pare-brise ordinaires à faces parallèles posent un premier problème de dédoublement de l'image lors de leur utilisation comme réflecteur. En effet, tel qu'illustré par la figure 1, les rayons lumineux émis par la source du HUD, qui sont réfléchis à la fois par la surface intérieure et la surface extérieure du pare-brise, présentent à l'observateur deux images décalées l'une par rapport à l'autre. Il est connu que ce premier problème peut être évité en utilisant un pare-brise à section en forme de coin qui amène les deux surfaces réfléchissantes du pare-brise à former un angle tel que les deux images réfléchies se superposent aux yeux du conducteur. De la sorte, non seulement on obtient une image réfléchie relativement nette, mais en outre, la clarté de l'image est accrue. A cela s'ajoute un second problème de dédoublement de l'image en transmission. Tel qu'illustré par la figure 2, la lumière émise par une source lumineuse 3a frappe la vitre courbe 1a et est réfractée conformément aux lois de réfraction connues au passage de l'air au verre et du verre à l'air, avant d'atteindre l'œil 2a de l'observateur. Ce faisceau est représenté par la ligne pleine P. Du point de vue de l'observateur, la source de lumière 3a semble être située à l'emplacement 3a'. Ceci est représenté par le faisceau P'. Cependant, en plus de ce faisceau P référencé comme faisceau primaire, le faisceau n'est que partiellement réfracté sur la seconde frontière gaz / air de la manière décrite ci-dessus. Ainsi, une plus petite fraction est réfléchie sur la seconde limite et est à nouveau réfléchie sur la première limite avant que le faisceau ne traverse maintenant la seconde limite et atteigne l'œil 2a de l'observateur. Ce faisceau, appelé "faisceau secondaire", est représenté par une ligne pointillée S. Du point de vue de l'observateur, la source de lumière 3a semble également être située à l'emplacement 3a". L'angle η entouré par le faisceau primaire P' et le faisceau secondaire S est ce que l'on appelle "l'angle d'image double". Pour adresser ce problème de double image en transmission, on peut prévoir qu'un angle de coin soit prévu entre les deux couches limites supposées sensiblement parallèles cet angle étant calculé en fonction du rayon de courbure de la vitre et de l'angle d'incidence du faisceau lumineux, selon l'équation suivante:

$$\eta = \frac{2d}{R} \cdot \frac{\sin \varphi}{\sqrt{n^2 - sin^2 \varphi}}$$

où η est l'angle d'image double, n est l'indice de réfraction du verre, d est l'épaisseur de la vitre, R est le rayon de courbure de la vitre à l'emplacement du faisceau lumineux incident, et φ est l'angle d'incidence du faisceau lumineux par rapport à la perpendiculaire sur la tangente à la vitre.

Dans le cas des vitres planes, l'angle d'image double η est une fonction de l'angle de coin δ formé par les surfaces de verre, selon la formule suivante :

$$\eta = 2.\delta. \frac{\sqrt{n^2 - sin^2 \varphi}}{\cos \varphi}$$

Ainsi, en combinant les formules précitées, l'angle de coin δ nécessaire à l'élimination de la double image satisfait l'équation suivante :

$$\delta = \frac{d}{R} \cdot \frac{\cos \varphi . \sin \varphi}{n^2 - sin^2 \varphi}$$

De manière connue, et tel que décrit dans le document brevet WO2017090561A1, certains verres à coin permettent de répondre à ces spécifications techniques. Dans la présente description, les termes « verre à coin » désignent une feuille de verre présentant une section cunéiforme, également dite en fuseau. Dans la suite de la description, une telle section est également nommée « section théorique en coin ». Un tel verre est nommé « wedge glass » en langue anglaise.

Dans l'optique de fabriquer un tel verre à coin, il est connu de l'état de la technique, et notamment du document brevet WO2016117650A1, de mettre en oeuvre un procédé dit « float », dans lequel une feuille de verre est obtenue par flottage d'un ruban de verre sur un bain de métal fondu. De manière courante, ce terme « float » est également utilisé pour nommer une installation adaptée pour la fabrication de verre plat selon ce procédé.

Plus précisément, et tel qu'illustré par les figures 3 et 4, le ruban de verre 8 est entraîné à vitesse constante, dite vitesse d'étenderie V, suivant une direction de déplacement longitudinale L depuis un côté amont du bain 3, où du verre fondu est coulé sur le métal fondu 7, jusqu'à un côté aval du bain 4, où le ruban de verre 8 quitte le bain 3. Par direction de déplacement longitudinale ou direction de lignage, on entend la direction d'écoulement du verre sur le bain, ladite direction étant parallèle à l'axe du bain et à l'axe du ruban de verre.

La direction dite latérale ou perpendiculaire s'étend perpendiculairement à cette direction longitudinale, d'un bord latéral à l'autre du bain.

Le ruban de verre 8 est entraîné par des rouleaux extracteurs 9 placés en aval du bain 1, et est de plus étiré transversalement et/ou axialement par une pluralité de paires de roues latérales 10 positionnées de part et d'autre du bain 1, au contact de la surface supérieure du ruban de verre 8.

Ainsi, les deux roues latérales 10 formant chacune desdites paires sont positionnées le long d'un axe latéral, en vis-à-vis l'une de l'autre, sur des bords opposés du bain. De telles roues latérales et/ou les paires formées par ces dernières sont également nommées « top-roll » en langue anglaise. Ces roues latérales sont généralement dentées, en acier, et positionnées de manière légèrement oblique par rapport à la direction longitudinale de déplacement du ruban de verre. La vitesse périphérique des rouleaux extracteurs correspond à la vitesse de déplacement longitudinal du ruban de verre dans l'étenderie, c'est-à-dire la zone en aval du bassin dédiée à la recuisson et au refroidissement du ruban de verre, d'où la dénomination de « vitesse d'étenderie », également nommée « vitesse de ligne ». Sous l'action combinée des rouleaux extracteurs et des roues latérales, le verre est étiré et aminci, ou au contraire épaissi, selon des directions longitudinales et/ou latérales, depuis une épaisseur d'équilibre de 6 mm vers une épaisseur choisie. En sortie de bain 1, le ruban de verre 8 est amené vers un poste de découpe, non représenté, dans lequel des feuilles de verre 1 sont coupées de la bande de verre 8 et empilées.

Dans ce contexte, il est connu de l'état de la technique, et notamment du document brevet WO2016117650A1, de calibrer la vitesse périphérique de rotation des roues latérales 10 de sorte qu'elle soit croissante selon la direction de lignage, afin d'obtenir un ruban de verre 8 qui présente selon sa direction latérale une forme en coin.

Un tel procédé de fabrication présente cependant plusieurs inconvénients majeurs, dont font au moins partie :

- La qualité optique insatisfaisante d'un verre feuilleté intégrant une feuille de verre à coin obtenue via le procédé décrit ci-dessus,
- Les difficultés rencontrées pour contrôler l'angle de coin du ruban de verre 8, tant au niveau de la zone destinée à former le HUD qu'en dehors.

En ce qui concerne le premier inconvénient, il a été observé que des turbulences existent dans le bain de métal fondu 7 immédiatement sous le ruban de verre 8 et que ces turbulences s'imprègnent à la surface du ruban de verre 8 sous forme d'ondulations longitudinales et subsistent dans le verre obtenu sur une face ou les deux, ces ondulations contribuant pour une part importante à dégrader la qualité optique du verre. Dans la suite du présent texte, ces défauts ondulatoires et/ou dioptriques sont nommés « distorsions du float », ou « défauts d'ombroscopie », en référence à l'une des méthodes de contrôle optique permettant de les identifier. Selon cette méthode dite d'ombroscopie, un faisceau lumineux incident est réfléchi sur une feuille de verre à contrôler avant d'être projetée sur un écran dédié et d'être évaluée visuellement. Ces défauts d'ombroscopie présents sur les faces de la feuille de verre agissent comme lentilles convergentes ou divergentes et forment sur l'écran de projection un motif de bandes claires et sombres, ce qui permet d'en évaluer la teneur. A noter que la limitation de ces défauts constitue la première source technique de limitation de la vitesse de ligne du float.

Dans le contexte d'un procédé de fabrication d'une feuille de verre par flottage comprenant la formation d'un ruban de verre 8 ayant une forme en faisceau selon sa direction latérale, tel que décrit ci-dessus, le ruban de verre 8 est coupé en sortie de bain 1 selon sa direction longitudinale, afin de former une feuille de verre 11 en coin. Afin de former un vitrage feuilleté, par exemple de type parebrise, cette feuille de verre 11 est par la suite intégrée au sein d'un verre feuilleté 14 de sorte que la zone HUD forme une bande horizontale positionnée dans la partie inférieure du parebrise 14. En d'autres termes, pour un utilisateur positionné dans l'axe longitudinal L du ruban de verre 8, la feuille de verre 10 est coupée en sortie de bain et pivotée à 90° pour former le parebrise du véhicule automobile. De cette manière, hauteur et largeur sont inversées entre le ruban de verre 8 et le pare-brise. On comprend dès lors que les défauts d'ombroscopie initialement orientés selon l'axe longitudinal L du ruban de verre 8 se retrouvent finalement orientés selon la direction horizontale du parebrise.

Or, il a été observé par les inventeurs que l'orientation imposée des défauts d'ombroscopie selon la direction horizontale d'un pare-brise tend à dégrader significativement sa qualité optique, ce qui constitue un inconvénient majeur de ce procédé dans nombre d'applications industrielles.

Au regard de ces difficultés, il est connu de réduire la vitesse d'étenderie, ce qui permet de limiter la présence de défauts d'ombroscopie et donc d'améliorer la qualité optique du verre obtenu. Cette solution technique reste cependant très insatisfaisante puisqu'elle implique une diminution substantielle de la productivité du procédé.

En ce qui concerne le deuxième inconvénient cité ci-dessus, il ressort de l'état de la technique qu'aucune méthode connue de fabrication de verre à coin par flottage ne permet un contrôle local de l'angle de coin du ruban de verre 8 sans que l'ensemble de sa surface, considérée selon sa section en fuseau, n'en soit impacté.

Dans la suite de la description, une propriété « locale » désigne une propriété d'un espace topologique qui est vraie pour un point et ses environs immédiats dans un ensemble, sur une ligne ou sur une surface.

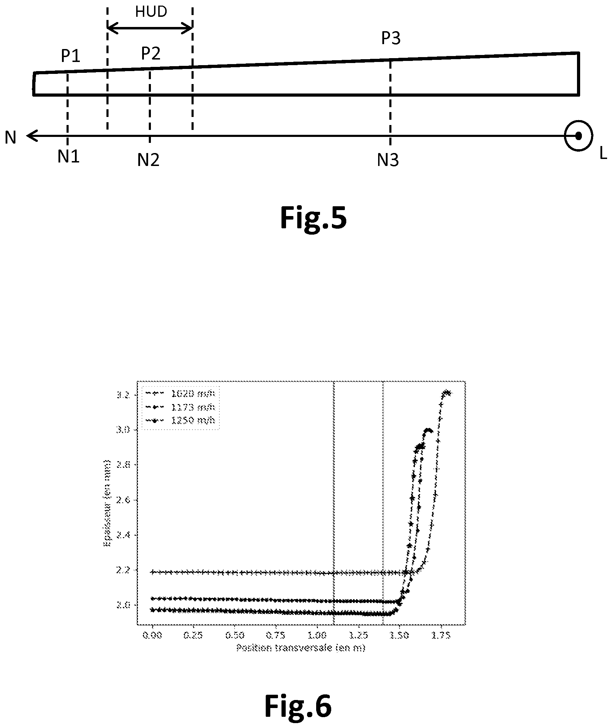

Ce concept est illustré par la figure 5, qui est une représentation schématique de la section en fuseau d'un ruban de verre 8, également dite « section en coin ». Dans le contexte du procédé connu décrit ci-dessus, cette section est opérée selon un plan perpendiculaire à la direction longitudinale L, et permet de mettre en valeur la surface en coin du ruban 8, qui s'étend selon l'axe théorique N correspondant à la direction transversale. Différents points P1, P2 et P3 répartis sur cette surface en coin ont respectivement pour projections orthogonales sur l'axe théorique N les points N1, N2 et N3. De manière générale, la zone destinée à former le HUD est comprise entre 1,10 et 1,40 m du centre du ruban 8, selon une direction transversale. Sur la figure 5, les limites de cette zone HUD sont illustrées par deux barres verticales. Ainsi, le point P2 est positionné dans cette zone HUD tandis que les points P1 et P3 sont respectivement positionnés en-dessous et au-dessus de cette zone HUD, une fois le verre-feuilleté mis en application, par exemple en tant que par parebrise d'un véhicule automobile.

Tel qu'indiqué ci-dessus, les procédés connus de fabrication de verre à coin par flottage n'offrent pas la possibilité d'une modification locale de l'angle de coin du ruban 8 sans que l'ensemble de sa surface, considérée selon sa section en fuseau, n'en soit impacté. Transposé sur la figure 5, cela signifie qu'une variation d'un paramètre du float, par exemple la vitesse périphérique d'un top-roll, ayant pour objectif de modifier l'angle de coin du ruban au niveau du point P2, entraînera nécessairement des modifications de cet angle de coin au niveau des points P1 et P3. Il apparaît donc très complexe, sinon impossible, de prédire et de modifier avec précision la valeur de l'angle de coin des différents points P1, P2 et P3, indépendamment les uns des autres.

Le document brevet JP2017105665A décrit une système de HUD comprenant un verre feuilleté avec au moins un verre à coin. Les caractéristiques de l'ensemble sont choisies pour diminuer les distorsions optiques dues au verre flotté.

La présente invention permet de remédier au premier inconvénient cité ci-dessus.

Selon des modes de réalisation particuliers, elle permet également de remédier au deuxième inconvénient cité ci-dessus.

Plus particulièrement, dans au moins un mode de réalisation, la technique proposée se rapporte à un procédé de fabrication de verre à coin adapté pour être mis en oeuvre dans une installation de fabrication de verre plat par flottage d'un ruban de verre sur un bain de métal fondu, de préférence de l'étain fondu, dans lequel le ruban de verre est entraîné suivant une direction de déplacement longitudinale depuis un côté amont du bain, où du verre fondu est coulé sur le métal fondu, jusqu'à un côté aval du bain, où le ruban de verre quitte le bain, ledit ruban de verre étant entraîné à une vitesse V, dite vitesse d'étenderie, par des rouleaux extracteurs placés en aval du bain, ledit ruban de verre étant de plus étiré transversalement et/ou axialement par une pluralité de paires de roues latérales positionnées de part et d'autre du bain au contact de la surface supérieure du ruban de verre, ledit procédé étant caractérisé en ce qu'il comprend une étape de variation temporaire d'au moins un paramètre mécanique de ladite installation, ladite variation temporaire introduisant une modification locale de l'épaisseur dudit ruban de verre selon sa direction longitudinale.

Dans la présente description, le terme « temporaire » qualifie une variation d'un paramètre mécanique qui n'est mise en oeuvre que pendant une période de temps t déterminée, d'une durée limitée. Selon un mode de réalisation particulier, cette période de temps t est comprise entre 1 et 10 secondes, préférentiellement entre 4 et 8 secondes.

Dans ce contexte, l'invention repose sur le concept nouveau et inventif consistant à former un verre à coin selon la direction longitudinale d'un float, par l'adoption d'une gestion dynamique d'au moins un paramètre mécanique de cette installation.

Selon un préjugé technique solidement établi, la gestion d'une installation de fabrication de verre plat par flottage est toujours réalisée de manière statique. Ainsi, les différents paramètres mécaniques pouvant intervenir dans les modifications d'épaisseur du ruban de verre, tels que les vitesses relatives des top-roll considérées de manière individuelle ou les unes par rapport aux autre, ou l'orientation angulaire des top-roll, sont déterminés en fonction des spécificités du verre que l'on cherche à obtenir et sont fixées de manière à rester invariantes pendant toute la durée de production de ce type de verre. Dans cette configuration, un verre à coin ne peut être formé que dans la direction latérale du float, tel que décrit dans l'état de la technique.

Or, de manière surprenante, il a été constaté par les inventeurs qu'une gestion dynamique d'au moins un de ces paramètres mécaniques présente, dans le contexte particulier de la fabrication de verre à coin, plusieurs avantages significatifs détaillés dans le présent texte. Le terme « dynamique », par opposition au terme statique, qualifie une gestion du float dans laquelle au moins un paramètre est amené à varier dans le temps, à une fréquence déterminée, au cours de la production d'un type particulier de verre. A noter que les paramètres thermiques ne sont pas concernés par ces variations temporaires, l'inertie thermique du float étant beaucoup trop élevée pour réussir à la contrôler de manière dynamique.

Il a été constaté par les inventeurs qu'une gestion dynamique du float permet, pour une qualité optique équivalente de verre, d'améliorer significativement la qualité optique d'un verre feuilleté intégrant une feuille de verre à coin obtenue via ce procédé. En effet, le verre à coin étant formé selon la direction longitudinale L du float, les défauts d'ombroscopie générés selon cette même direction conservent une orientation verticale lors de la mise en oeuvre du verre feuilleté obtenu, par exemple en tant que parebrise. Au sein de ce verre feuilleté, il y a donc superposition des défauts d'ombroscopie, selon une direction verticale, ce qui confère au verre feuilleté une meilleure qualité optique que dans le contexte d'un verre feuilleté au sein duquel au moins une feuille de verre présente une orientation horizontale de son lignage et donc de ses défauts d'ombroscopie.

A noter que la différence de qualité optique perçue est d'autant plus visible que l'inclinaison du parebrise est forte. La mise en oeuvre de la présente invention est donc particulièrement avantageuse dans un contexte de forte inclinaison du verre feuilleté obtenu.

L'invention permet donc de s'affranchir de toute adaptation supplémentaire visant à améliorer la qualité optique du verre à coin initialement produit, afin de compenser la dégradation subséquente des propriétés optiques du verre feuilleté obtenu après intégration de ce verre à coin selon une orientation horizontale. Le gain de productivité lié à un tel affranchissement représente un avantage certain.

Selon des modes de réalisations particuliers de l'invention, l'invention permet de plus de contrôler localement la valeur de l'angle de coin du ruban de verre sans que l'ensemble de sa surface, considérée selon sa section en fuseau, n'en soit impacté. Il est ainsi possible de faire varier les propriétés topologiques d'au moins une portion de cette surface, indépendamment des autres, de sorte que cette portion de surface, comprise ou non dans la zone HUD, présente un angle de coin constant, variable ou nul.

Selon des modes de réalisations particuliers de l'invention, un procédé selon l'invention n'intègre en outre aucune limitation quant à la longueur de la section en fuseau à former, qui correspond, dans le contexte d'une mise en oeuvre du verre feuilleté obtenu comme parebrise, à la hauteur de ce dernier. En effet, à la différence des procédés traditionnels de formage de verre à coin selon la direction transversale du float, qui sont limités par la largeur de l'étenderie, ce procédé ne connaît pas une telle limitation, le verre à coin étant formé selon la direction longitudinale du float.

Selon un mode de réalisation particulier, ledit au moins un paramètre mécanique est la vitesse d'étenderie V, qui varie préférentiellement entre 600 m/h et 1400 m/h, préférentiellement entre 900 m/h et 1200 m/h.

Dans le présent texte, la « vitesse spécifique de rotation périphérique » d'une paire de roues latérales désigne le rapport de sa vitesse périphérique $R_x$ sur la vitesse d'étenderie V. Cette vitesse périphérique $R_x$ correspond à la vitesse de rotation de la roue au niveau de son point de rayon maximal.

Tel que décrit dans la suite du texte, les inventeurs ont constaté que l'épaisseur du ruban de verre diminue quand la vitesse d'étenderie augmente, et inversement. En d'autres termes, une diminution globale de la vitesse spécifique de chacune des roues latérales, par augmentation de la vitesse d'étenderie V, permet de réduire l'épaisseur du ruban de verre, et inversement.

De manière avantageuse, le choix de l'amplitude de variation d'un des paramètres mécaniques de l'installation permet de contrôler la variation d'épaisseur du ruban de verre, et donc sa pente, tandis que le choix de la période de temps t pendant laquelle cette variation paramétrique est mise en oeuvre permet de contrôler la hauteur du verre à coin à former.

De manière avantageuse, ledit au moins un paramètre mécanique appartient au groupe comprenant :

- la vitesse spécifique de rotation périphérique $R_x$ d'au moins une desdites paires de roues latérales, qui varie préférentiellement entre 0.1 et 0.2, préférentiellement entre 0.12 et 0.15, et/ou
- l'inclinaison d'au moins une desdites roues latérales, qui varie préférentiellement entre -5° et 30°.

Il est décrit un verre à coin obtenu par un procédé de fabrication selon un mode de réalisation particulier de l'invention.

Selon un mode de réalisation particulier, l'invention concerne également un verre à coin adapté pour être intégré au sein d'un vitrage pour un véhicule de transport terrestre, aquatique ou aérien, pour le bâtiment, le mobilier urbain, ou l'aménagement intérieur, caractérisé en ce qu'il comprend des défauts d'ombroscopie orientés selon sa section théorique en coin.

Tel que décrit dans le présent texte, une telle orientation des défauts d'ombroscopie générés au cours du formage par flottage du verre à coin est une propriété intrinsèque de ce dernier, qui est inhérente à un tel procédé de fabrication.

Selon un mode de réalisation particulier, ledit verre à coin comprend une zone adaptée pour la visualisation tête haute (HUD) dont la valeur d'angle de coin varie linéairement selon sa section théorique en coin, préférentiellement à partir de la position centrale de ladite zone (HUD).

Une telle topologie de la zone HUD, intrinsèque à une fabrication via un procédé selon l'invention, présente l'avantage de remédier aux problèmes exposés dans le présent texte de dédoublement de l'image en réflexion et en transmission.

Selon un mode de réalisation particulier, ledit verre à coin comprend une zone adaptée pour la visualisation tête haute (HUD) et une zone distincte qui satisfait l'équation suffisante :

$$\delta = \frac{d}{R} \cdot \frac{\cos\varphi \cdot \sin\varphi}{n^2 - sin^2\,\varphi}$$

où $\delta$ est l'angle de coin, n est l'indice de réfraction du verre, d est l'épaisseur du verre, R est le rayon de courbure du verre à l'emplacement du faisceau lumineux incident, et $\varphi$ est l'angle d'incidence du faisceau lumineux par rapport à la perpendiculaire sur la tangente du verre.

Une telle zone distincte, également dite « contre-wedge », permet de remédier au problème exposé dans le présent texte de dédoublement de l'image en transmission. La mise en oeuvre de cette zone est particulièrement avantageuse lorsque qu'un tel verre à coin est intégré dans la partie supérieure d'un parebrise à forte courbure, le phénomène de dédoublement de l'image en transmission étant particulièrement pénalisant dans ce contexte.

Selon un mode de réalisation particulier, l'invention concerne également un système de contrôle d'une installation de fabrication de verre plat par flottage d'un ruban de verre sur un bain de métal fondu, de préférence de l'étain fondu, dans laquelle le ruban de verre est entraîné suivant une direction de déplacement longitudinale depuis un côté amont du bain, où du verre fondu est coulé sur le métal fondu, jusqu'à un côté aval du bain, où le ruban de verre quitte le bain, ledit ruban de verre étant entraîné à une vitesse V, dite vitesse d'étenderie, par des rouleaux extracteurs placés en aval du bain, ledit ruban de verre étant de plus étiré transversalement et/ou axialement par une pluralité de paires de roues latérales positionnées de part et d'autre du bain au contact de la surface supérieure du ruban de verre, ledit système de contrôle étant caractérisé en ce qu'il comprend au moins un module de commande adapté pour commander une variation temporaire d'au moins un paramètre mécanique de ladite installation afin d'introduire une modification locale de l'épaisseur dudit ruban de verre selon ladite direction longitudinale.

La mise en oeuvre d'un tel système de contrôle permet d'automatiser la fabrication de verre à coin selon l'invention.

Selon un mode de réalisation particulier, ledit système de contrôle comprend un dispositif de contrôle de l'épaisseur du ruban de verre au niveau du bain.

Il est ainsi possible de contrôler en temps réel l'épaisseur du ruban de verre et d'adapter les différents paramètres du procédé de fabrication en fonction de la valeur d'épaisseur mesurée.

Selon un mode de réalisation particulier, l'invention concerne également une installation de fabrication de verre plat par flottage, adaptée pour mettre en oeuvre un procédé selon un mode de réalisation particulier de l'invention, ladite installation comprenant un système de contrôle selon un mode de réalisation particulier de l'invention.

Selon un mode de réalisation particulier, l'invention concerne également un programme d'ordinateurs téléchargeable depuis un réseau de communication et/ou enregistré sur un support d'enregistrement adapté pour être lu par un ordinateur et/ou exécuté par un processeur, comprenant un code d'instructions adapté pour commander un système de contrôle selon un mode de réalisation de l'invention, pour mettre en oeuvre un procédé de fabrication selon un mode de réalisation particulier de l'invention.

Selon un mode de réalisation particulier, l'invention concerne de plus un support d'enregistrement informatique, sur lequel est enregistré un tel programme d'ordinateurs.

Selon un mode de réalisation particulier, l'invention concerne également un verre feuilleté pour un vitrage, ledit verre feuilleté comprenant un intercalaire plastique viscoélastique interposé entre les deux feuilles de verre, au moins une desdites feuilles de verre étant un verre à coin selon un mode de réalisation particulier de l'invention.

De manière avantageuse, une desdites feuilles a une épaisseur de 2,1 mm, tandis que l'autre a une épaisseur inférieure à 2,1 mm, préférentiellement de 1,8 mm, encore préférentiellement de 1,6 mm, encore préférentiellement de 1,4 mm, encore préférentiellement de 1,1 mm, encore préférentiellement de 0,7 mm.

La mise en oeuvre d'une feuille de verre à coin au sein d'un tel verre feuilleté, dont l'épaisseur totale est réduite, présente l'avantage d'atténuer les phénomènes exposés en introduction du présent texte de dédoublement de l'image en réflexion et en transmission. En particulier, dans l'hypothèse où la feuille d'épaisseur réduite est positionnée à l'intérieur de l'habitacle et est recouverte d'un revêtement, le rapprochement constaté entre ce revêtement et la feuille de verre de 2,1 mm d'épaisseur permet d'atténuer la gêne pouvant être occasionnée par l'apparition d'une troisième image fantôme, générée au sein dudit revêtement.

Selon un mode de réalisation particulier, ledit verre à coin (11) a une épaisseur de 2,1 mm.

L'utilisation d'un ruban de 2,1 mm d'épaisseur pour former le verre à coin, et d'un ruban d'épaisseur réduite pour former le verre standard, rend plus aisée l'obtention d'une feuille de verre à coin présentant le profil en fuseau souhaité, ainsi qu'une qualité optique satisfaisante. En effet, plus le verre est mince, plus il est difficile d'obtenir une qualité optique satisfaisante. De même, il est plus difficile d'obtenir un angle de coin satisfaisant lorsque la variation relative de l'épaisseur sur sa valeur nominale devient trop importante.

Selon un mode de réalisation particulier, l'invention concerne également l'utilisation d'un verre feuilleté selon un mode de réalisation particulier de l'invention, comme vitrage pour un véhicule de transport terrestre, aquatique ou aérien, pour le bâtiment, le mobilier urbain, ou l'aménagement intérieur, préférentiellement comme pare-brise, vitrage latéral, custode ou lunette arrière de véhicule automobile.

D'autres caractéristiques et avantages de l'invention apparaîtront à la lecture de la description suivante de modes de réalisation particuliers, donnés à titre de simples exemples illustratifs et non limitatifs, et des figures annexées, pour lesquelles :

- La figure 1 est une représentation schématique du principe de dédoublement d'une image par un parebrise lors de son utilisation comme réflecteur,
- La figure 2 est une représentation schématique du principe de dédoublement d'une image lors de sa transmission au travers d'un pare-brise,
- La figure 3 est une représentation schématique en plongée d'une installation de fabrication de verre plat par flottage, dite de type « float », qui est adaptée pour mettre en oeuvre un procédé selon un mode de réalisation particulier de l'invention,

- La figure 4 est une représentation schématique d'une vue en coupe suivant les flèches A-A à travers l'installation représentée à la figure 3, qui est adaptée pour mettre en oeuvre un procédé selon un mode de réalisation particulier de l'invention,

- La figure 5 une représentation schématique de la section en fuseau d'un ruban de verre adapté pour être mis en oeuvre dans un procédé selon un mode de réalisation particulier de l'invention,

- La figure 6 est un graphique comprenant une courbe estimative de la variation du profil d'épaisseur du centre du ruban de verre 8 en fonction de la vitesse d'étenderie, lors de la mise en oeuvre dans un procédé selon un mode de réalisation particulier de l'invention

- La figure 7 est une représentation schématique d'une vue en coupe d'un verre feuilleté selon un mode de réalisation particulier de l'invention,

- La figure 8 est une représentation schématique d'un système de contrôle de la fabrication de verre à coin selon un mode de réalisation particulier de l'invention,

- La figure 9 est un diagramme de flux d'un procédé de fabrication d'un verre à coin selon un mode de réalisation de l'invention.

Les différents éléments illustrés par les figures ne sont pas nécessairement représentés à l'échelle réelle, l'accent étant davantage porté sur la représentation du fonctionnement général de l'invention. Dans ce contexte, sauf indication contraire, les numéros de référence qui sont identiques représentent des éléments similaires ou identiques.

Plusieurs modes de réalisation particuliers de l'invention sont présentés par la suite. Il est entendu que la présente invention n'est nullement limitée par ces modes de réalisation particuliers et que d'autres modes de réalisation peuvent parfaitement être mis en oeuvre.

Notons que dans la présente description, l'expression « compris(e) entre ... et ... » inclut les bornes dans l'intervalle.

Tel qu'illustré par les figures 3 et 4, une installation de fabrication de verre plat par flottage, dite de type « float », comprend une cuve 1 munie de parois latérales 2, de parois d'extrémités 3 et 4, respectivement à l'entrée et à la sortie de la cuve 1, et d'une sole 5. La cuve 1 contient un bain d'étain en fusion, ou de tout autre métal en fusion approprié, référencé 7. Le verre fondu est déversé sur le bain de métal en fusion 7 à son entrée, à partir d'un canal de distribution 6 se finissant par une lèvre de coulée et disposé au-dessus de la paroi d'entrée 3 de la cuve 1. Le ruban de verre 8 qui se forme sur le bain de métal en fusion 7 est entraîné en continu à une vitesse dite d'étenderie suivant une direction de déplacement longitudinale L depuis l'entrée de la cuve, c'est-à-dire le côté amont du bain 3, jusqu'à sa sortie, c'est-à-dire le côté aval du bain 4, par des rouleaux extracteurs 9 placés à l'extérieur de la cuve 1 du côté aval.

Du point de vue du verre, le bain 7 définit plusieurs zones successives en suivant la direction de déplacement longitudinal L du ruban de verre 8. Après avoir été déversé sur le bain de métal fondu 7, le verre 8 s'étale librement au maximum sur le bain 7 dans une première zone I. Il se forme ainsi un ruban de verre 8 qui se déplace vers l'aval sous l'effet de la traction des rouleaux extracteurs 9.

Pour la production de verre mince (épaisseur inférieure à l'épaisseur d'équilibre du verre considéré, généralement environ 6 mm), ce verre 8 est étiré transversalement et axialement par l'action de roues dentées latérales 10, dites top-rolls, et axialement par l'étenderie en aval de l'enceinte de flottage. Plus précisément, dans une deuxième zone II, le ruban de verre 8 en formation subit des forces longitudinales et dirigées vers l'extérieur sous les actions combinées de rouleaux extracteurs 9 et de roues latérales 10. Les roues latérales 10 sont généralement en acier et légèrement obliques par rapport à la direction de déplacement longitudinal L du ruban de verre 8. Elles sont entraînées par des moteurs généralement à des vitesses différentes selon leur position, et croissantes vers l'aval. Dans cette deuxième zone II, l'étirage du verre commence et celui-ci s'amincit.

Après la zone des top-roll, le verre subit une diminution de largeur appelée striction. Ainsi, dans cette troisième zone III, le ruban de verre 8 prend sa forme définitive sous l'action des rouleaux extracteurs 9 l'entraînant en direction de la sortie du bain 7. Les deuxième et troisième zones II, III forment ensemble la zone d'étirage qui est suivie par une quatrième zone IV, dite d'étenderie ou de consolidation, où le ruban de verre 8 figé se refroidit progressivement.

De manière générale, l'invention repose sur le concept nouveau et inventif consistant à former un verre à coin selon la direction longitudinale d'un float, par l'adoption d'une gestion dynamique d'au moins un paramètre mécanique de cette installation.

Dans la suite de la description, un modèle de gestion dynamique de l'installation est décrit plus en détail, et repose sur une variation temporaire de la vitesse d'étenderie. Bien entendu, l'invention ne se limite pas à cet exemple, décrit à titre illustratif et non limitatif. En particulier, il est tout à fait envisageable de faire varier d'autres paramètres mécaniques de l'installation, et/ou certains des paramètres déjà cités, dans d'autres proportions, sans pour autant sortir du champ de protection revendiqué. En outre, selon des modes de réalisation particuliers de l'invention, les valeurs respectives d'une pluralité de paramètres mécaniques peuvent varier simultanément, et selon une fréquence déterminée, toujours dans l'objectif de fabriquer un verre à coin selon la direction longitudinale L du bain.

En vue d'illustrer ce modèle de gestion dynamique, selon lequel est mis en oeuvre une variation temporaire de la vitesse d'étenderie tandis que les autres paramètres sont maintenus invariants, la figure 6 est un graphique représentant les différents profils d'épaisseur du centre du ruban 8 obtenus après mise en oeuvre de trois vitesses d'étenderie différentes, respectivement de 1020 m/h, 1173 m/h et 1250 m/h.

Bien entendu, l'invention ne se limite pas à de telles plages de variation, la vitesse d'étenderie pouvant selon un mode de réalisation particulier varier entre 600 m/h et 1400 m/h.

Tel qu'illustré par la figure 6, il apparaît que l'épaisseur diminue quand la vitesse d'étenderie augmente, et inversement. Plus précisément, une variation de 230 m/h engendre une variation d'épaisseur d'environ 0,2 mm.

Dans ce contexte, le passage d'une vitesse d'étenderie de 1020 m/h à 1250 m/h, le temps que 0,3 m de verre soient créés, c'est-à-dire en 0,9 secondes environ, permet de former une pente de 0,1 mrad (0,3 mm sur 0,3 m). Une fois la zone du HUD produite, il ne reste plus qu'à former le reste du pare-brise (0,9 m en 2,9 s). La valeur totale des cycles de formation d'un tel verre en coin est donc d'environ 4 secondes. A noter cependant qu'un tel accroissement de la vitesse d'étenderie s'accompagne d'une diminution de la largeur du ruban de verre.

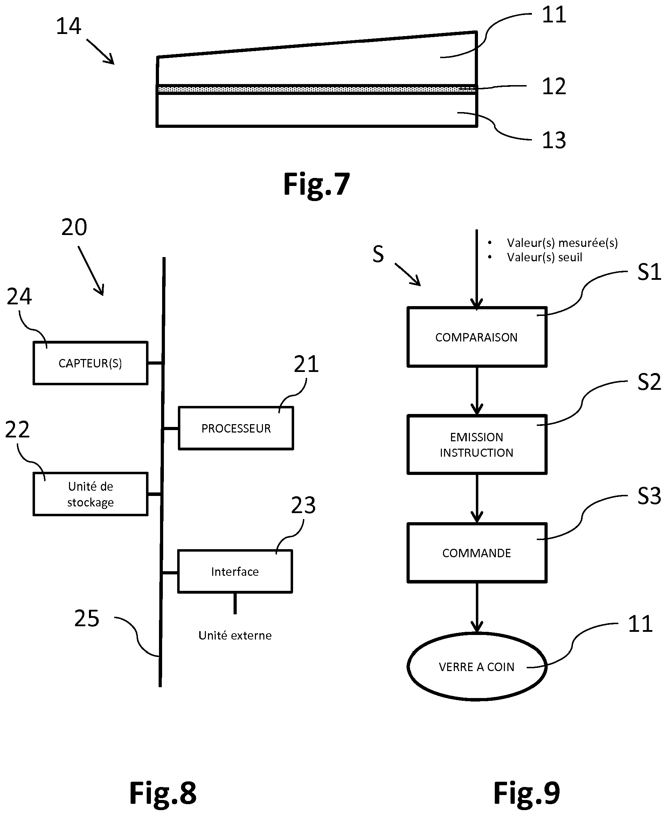

Selon un mode de réalisation particulier, et tel qu'illustré par la figure 7, la feuille de verre à coin 11 obtenue par le procédé ci-dessus mentionné, d'une épaisseur de 2,1 mm, est intégrée au sein d'un verre feuilleté 14 comprenant un intercalaire plastique viscoélastique 12 interposé entre la feuille de verre à coin 11 et une deuxième feuille de verre standard 13 de 1,6 mm d'épaisseur.

Selon des modes de réalisations alternatifs, il est entendu que la deuxième feuille de verre 13 peut soit avoir une épaisseur égale de 2,1 mm, soit une épaisseur réduite, par exemple de 0,7 mm. Selon un mode de réalisation alternatif, la deuxième feuille de verre peut également présenter une forme en fuseau, l'angle de coin total du verre feuilleté 14 étant alors égal à la somme des angles de coin respectifs des deux feuilles (11, 13).

La mise en oeuvre d'une feuille de verre à coin 11 au sein d'un tel feuilleté 14, dont l'épaisseur totale est réduite, présente l'avantage d'atténuer les phénomènes exposés en introduction du présent texte de dédoublement de l'image en réflexion et/ou en transmission. En particulier, dans l'hypothèse où la feuille d'épaisseur réduite est positionnée à l'intérieur de l'habitacle et est recouverte d'un revêtement, le rapprochement constaté entre ce revêtement et la feuille de verre de 2,1 mm d'épaisseur permet d'atténuer la gêne pouvant être occasionnée par l'apparition d'une troisième image fantôme, générée au sein dudit revêtement.

Dans ce contexte, l'utilisation d'un ruban de 2,1 mm d'épaisseur pour former le verre à coin 11, et d'un ruban de 1,6 mm d'épaisseur pour former le verre standard 13, rend plus aisée l'obtention d'un verre feuilleté 14 présentant le profil en fuseau souhaité, ainsi qu'une qualité optique satisfaisante. En effet, plus le verre est mince, plus il est difficile d'obtenir une qualité optique satisfaisante. De même, il est plus difficile d'obtenir un angle de coin satisfaisant lorsque la variation relative de l'épaisseur sur sa valeur nominale devient trop importante.

Selon un mode de réalisation alternatif représenté par la figure 8, la fabrication (S) de verre à coin 11 est automatisée via un système de contrôle 20 décrit dans le présent texte, ce qui offre la possibilité d'une adaptation en continue d'un ou de plusieurs paramètres mécaniques de ladite installation, dans l'objectif d'introduire une modification locale de l'épaisseur du ruban de verre 8 selon sa direction longitudinale, suivant un procédé de contrôle S décrit dans le présent texte.

Ainsi, l'invention se rapporte également à un système 20 de contrôle de la fabrication de verre à coin telle que celle décrite dans le présent texte. Tel qu'illustré par la figure 8, un tel système de contrôle 20 comprend un processeur 21 ayant fonction de module de traitement, une unité de stockage 22, une unité d'interface 23 et un dispositif de mesure 24, qui sont connectés par un bus 25 informatique.

Le processeur 21 commande alternativement ou en combinaison les rouleaux extracteurs 9, et donc la vitesse d'étenderie V, la vitesse de rotation des roues latérales 10 et/ou leur angle d'inclinaison. L'unité de stockage 22 stocke au moins un programme à exécuter par le processeur 21, et diverses données, y compris les données recueillies par le dispositif de mesure 24, les paramètres utilisés par des calculs réalisés par le processeur 21, ou les données intermédiaires des calculs effectués par le processeur 21. Le processeur 21 peut être formé par tout matériel ou logiciel connu ou approprié, ou par une combinaison de matériel et de logiciel. L'unité de stockage 22 peut être formée par tout stockage approprié ou moyen adapté pour stocker le programme et les données de manière lisible par ordinateur. Le programme fait que le processeur 21 met en oeuvre un procédé de contrôle tel que celui décrit dans le présent texte.

L'unité d'interface 23 fournit une interface entre le système de contrôle 20 et un appareil externe. L'unité d'interface 23 peut notamment être en communication avec l'appareil externe via un câble ou une communication sans fil. Dans ce mode de réalisation, l'appareil externe peut être un rouleau extracteur 9 et/ou une roue latérale 10 et/ou une autre composante du float 1, telle qu'un dispositif de mesure de l'épaisseur centrale du ruban de verre 8. Dans ce dernier cas, des valeurs d'épaisseur peuvent être entrées dans le système 20 à travers l'unité d'interface 23, puis stockées dans l'unité de stockage 22.

Bien qu'un seul processeur 21 soit représenté sur la figure 10, un Homme du Métier comprendra qu'un tel processeur 21 peut comprendre différents modules et unités mettant en oeuvre les fonctions exécutées par le système de contrôle 20. Ces fonctions peuvent également être réalisées par une pluralité de processeurs 21 communiquant entre eux.

En pratique, une variation d'un ou de plusieurs des paramètres mécaniques de l'installation est commandée par le processeur 21, selon une amplitude donnée et pour une période de temps donnée, en fonction du verre à coin que l'on cherche à obtenir.

Cette opération est doublée d'une mesure en continue de l'épaisseur du verre, qui permet de contrôler l'adéquation entre le profil d'épaisseur que l'on cherche à obtenir et la valeur réelle mesurée.

Dans ce contexte, la figure 9 est un diagramme de flux illustrant les étapes successives d'un procédé de contrôle (S) de la fabrication de verre à coin 1 selon ce mode de réalisation particulier.

Au cours d'une première étape (étape S1), l'épaisseur mesurée du ruban de verre et/ou la vitesse périphérique mesurée d'un rouleau extracteur 9 et/ou la vitesse périphérique mesurée d'une top-roll 10 et/ou son inclinaison sont comparées à une valeur de référence correspondant au profil d'épaisseur que l'on cherche à obtenir.

Si l'écart entre ces deux valeurs est au-delà d'un seuil de tolérance prédéfini, une instruction est émise (étape S2) afin d'ajuster (étape S3) les paramètres mécaniques de l'opération en conséquence.

Selon ce mode de réalisation particulier, le contrôle de l'épaisseur est réalisé en continu. A noter que selon des modes de réalisation alternatifs, les types de mesures effectuées, les valeurs seuils, de référence, et/ou à les fréquences d'itération choisies peuvent varier d'une configuration paramétrique à une autre, sans pour autant s'éloigner du coeur de l'invention.

**Revendications**

1. Procédé de fabrication (S) de verre à coin (11), c'est-à-dire une feuille de verre présentant une section cunéiforme, adapté pour être mis en oeuvre dans une installation de fabrication de verre plat par flottage d'un ruban de verre (8) sur un bain de métal fondu (7), de préférence de l'étain fondu, dans lequel le ruban de verre (8) est entraîné suivant une direction de déplacement longitudinale (L) depuis un côté amont du bain (3), où du verre fondu est coulé sur le métal fondu (7), jusqu'à un côté aval du bain (4), où le ruban de verre (8) quitte le bain (3), ledit ruban de verre (8) étant entraîné à une vitesse V, dite vitesse d'étenderie, par des rouleaux extracteurs (9) placés en aval du bain (1), ledit ruban de verre (8) étant de plus étiré transversalement et/ou axialement par une pluralité de paires de roues latérales (10) positionnées de part et d'autre du bain (1) au contact de la surface supérieure du ruban de verre (8), ledit procédé (S) étant **caractérisé en ce qu'**il comprend une étape de variation temporaire d'au moins un paramètre mécanique de ladite installation, ladite variation temporaire introduisant une modification locale de l'épaisseur dudit ruban de verre (8) selon sa direction longitudinale.

2. Procédé (S) selon la revendication 1, **caractérisé en ce que** ledit au moins un paramètre mécanique est la vitesse d'étenderie V, qui varie préférentiellement entre 600 m/h et 1400 m/h, préférentiellement entre 900 m/h et 1200 m/h.

3. Procédé (S) selon l'une des revendications 1 et 2, **caractérisé en ce que** ledit au moins un paramètre mécanique appartient au groupe comprenant :

   • la vitesse spécifique de rotation périphérique $R_x$ d'au moins une desdites paires de roues latérales (10), c'est-à-dire le rapport de sa vitesse périphérique Rx sur la vitesse d'étenderie V, qui varie préférentiellement entre 0.1 et 0.2, préférentiellement entre 0.12 et 0.15, et/ou
   • l'inclinaison d'au moins une desdites roues latérales (10), qui varie préférentiellement entre -5° et 30°.

4. Verre à coin (11), c'est-à-dire feuille de verre présentant une section cunéiforme, adapté pour être intégré au sein d'un vitrage pour un véhicule de transport terrestre, aquatique ou aérien, pour le bâtiment, le mobilier urbain, ou l'aménagement intérieur, **caractérisé en ce qu'**il comprend des défauts d'ombroscopie orientés selon sa section théorique en coin.

5. Verre à coin selon la revendication 4, **caractérisé en ce qu'**il comprend une zone adaptée pour la visualisation tête haute (HUD) dont la valeur d'angle de coin varie linéairement selon sa section théorique en coin, préférentiellement à partir de la position centrale de ladite zone (HUD).

6. Verre à coin selon l'une des revendications 4 et 5, **caractérisé en ce qu'**il comprend une zone adaptée pour la visualisation tête haute (HUD) et une zone distincte qui satisfait l'équation suffisante :

$$\delta = \frac{d}{R} \cdot \frac{\cos\varphi \cdot \sin\varphi}{n^2 - sin^2\varphi}$$

où $\delta$ est l'angle de coin, n est l'indice de réfraction du verre, d est l'épaisseur du verre, R est le rayon de courbure du verre à l'emplacement du faisceau lumineux incident, et $\varphi$ est l'angle d'incidence du faisceau lumineux par rapport à la perpendiculaire sur la tangente du verre.

7. Système de contrôle (20) d'une installation de fabrication de verre plat par flottage d'un ruban de verre (8) sur un bain de métal fondu (7), de préférence de l'étain fondu, dans laquelle le ruban de verre (8) est entraîné suivant une direction de déplacement longitudinale (L) depuis un côté amont du bain (3), où du verre fondu est coulé sur le métal fondu (7), jusqu'à un côté aval du bain (4), où le ruban de verre (8) quitte le bain (3), ledit ruban de verre (8) étant entraîné à une vitesse V, dite vitesse d'étenderie, par des rouleaux extracteurs (9) placés en aval du bain (1), ledit ruban de verre (8) étant de plus étiré transversalement et/ou axialement par une pluralité de paires de roues latérales (10) positionnées de part et d'autre du bain (1) au contact de la surface supérieure du ruban de verre (8), ledit système de contrôle (20) étant **caractérisé en ce qu'**il comprend au moins un module (21) de commande adapté pour commander une variation temporaire d'au moins un paramètre mécanique de ladite installation afin d'introduire une modification locale de l'épaisseur dudit ruban de verre (8) selon ladite direction longitudinale (L).

8. Système de contrôle (20) selon la revendication 7, **caractérisé en ce qu'**il comprend un dispositif de contrôle (24) de l'épaisseur du ruban de verre (8) au niveau du bain (3).

9. Installation de fabrication de verre plat par flottage, adaptée pour mettre en oeuvre un procédé (S) selon l'une des revendications 1 et 2, ladite installation comprenant un système de contrôle (20) selon l'une des revendications 7 et 8.

10. Programme d'ordinateurs téléchargeable depuis un réseau de communication et/ou enregistré sur un support d'enregistrement adapté pour être lu par un ordinateur et/ou exécuté par un processeur, comprenant un code d'instructions adapté pour commander un système de contrôle selon l'une des revendications 7 et 8, pour mettre en oeuvre un procédé de fabrication selon l'une des revendications 1 à 3.

11. Support d'enregistrement informatique, sur lequel est enregistré un programme d'ordinateurs selon la revendication 10.

12. Verre feuilleté (14) pour un vitrage, ledit verre feuilleté (14) comprenant un intercalaire plastique viscoélastique (12) interposé entre deux feuilles de verre (11, 13), au moins une desdites feuilles de verre étant un verre à coin (11), c'est-à-dire une feuille de verre présentant une section cunéiforme, selon l'une des revendications 4 à 6.

13. Verre feuilleté (14) selon la revendication 12, **caractérisé en ce qu'**une desdites feuilles a une épaisseur de 2,1 mm, tandis que l'autre a une épaisseur inférieure à 2,1 mm, préférentiellement de 1,8 mm, encore préférentiellement de 1,6 mm, encore préférentiellement de 1,4 mm, encore préférentiellement de 1,1 mm, encore préférentiellement de 0,7 mm.

14. Utilisation d'un verre feuilleté (1) selon l'une des revendications 12 et 13 comme vitrage pour un véhicule de transport terrestre, aquatique ou aérien, pour le bâtiment, le mobilier urbain, ou l'aménagement intérieur, préférentiellement comme pare-brise, vitrage latéral, custode ou lunette arrière de véhicule automobile.

**Patentansprüche**

1. Verfahren zur Herstellung (S) von keilförmigem Glas (11), das heißt einer Glasscheibe mit einem keilförmigen Querschnitt, das dazu geeignet ist, in einer Anlage zur Herstellung von Flachglas durch Floaten eines Glasbandes (8) auf einem Bad aus geschmolzenem Metall (7), vorzugsweise aus geschmolzenem Zinn, implementiert zu werden, wobei das Glasband (8) entlang einer Längsbewegungsrichtung (L) von einer stromaufwärtigen Seite des Bades (3), wo das geschmolzene Glas auf das geschmolzene Metall (7) gegossen wird, bis zu einer stromabwärtigen Seite des Bades (4), wo das Glasband (8) das Bad (3) verlässt, gezogen wird, wobei das Glasband (8) durch Aufnahmewalzen (9), die stromabwärts des Bades (1) angeordnet sind, mit einer Geschwindigkeit V, die Kühlofengeschwindigkeit, gezogen wird, wobei das Glasband (8) außerdem durch eine Vielzahl von Paaren von Seitenrädern (10), die auf beiden Seiten des Bades (1) in Kontakt mit der oberen Oberfläche des Glasbandes (8) positioniert sind, quer und/oder axial gestreckt wird, wobei das Verfahren (S) **dadurch gekennzeichnet ist, dass** es einen Schritt der temporären Änderung mindestens eines mechanischen Parameters der Anlage umfasst, wobei die temporäre Änderung eine lokale Modifikation der Dicke des Glasbandes (8) entlang seiner Längsrichtung hervorruft.

2. Verfahren (S) nach Anspruch 1, **dadurch gekennzeichnet, dass** der mindestens eine mechanische Parameter die Kühlofengeschwindigkeit V ist, die vorzugsweise zwischen 600 m/h und 1400 m/h, vorzugsweise zwischen 900 m/h und 1200 m/h, variiert.

3. Verfahren (S) nach einem der Ansprüche 1 und 2, **dadurch gekennzeichnet, dass** der mindestens eine mechanische Parameter der Gruppe zugehörig ist, die Folgendes umfasst:

   • die spezifische Umfangsgeschwindigkeit $R_x$ mindestens eines der Paare von Seitenrädern (10), das heißt das Verhältnis der Umfangsgeschwindigkeit Rx zur Kühlofengeschwindigkeit V, das vorzugsweise zwischen 0,1 und 0,2, vorzugsweise zwischen 0,12 und 0,15 variiert, und/oder

• die Neigung mindestens eines der Seitenräder (10), die vorzugsweise zwischen -5° und 30° variiert.

4. Keilförmiges Glas (11), das heißt Glasscheibe mit einem keilförmigen Querschnitt, das dazu geeignet ist, in einer Verglasung für ein Land-, Wasser- oder Lufttransportfahrzeug, für Gebäude, Stadtmobiliar oder Innenausstattung, eingefügt zu werden, **dadurch gekennzeichnet, dass** es Fehler in Form von Schatten umfasst, die entlang seinem theoretischen keilförmigen Querschnitt ausgerichtet sind.

5. Keilförmiges Glas nach Anspruch 4, **dadurch gekennzeichnet, dass** es eine Zone umfasst, die für eine Head-Up-Anzeige (HUD) geeignet ist, bei der der Wert des Keilwinkels entlang ihrem theoretischen keilförmigen Querschnitt linear variiert, vorzugsweise ausgehend von der zentralen Position der Zone (HUD).

6. Keilförmiges Glas nach einem der Ansprüche 4 und 5,
**dadurch gekennzeichnet, dass** es eine Zone, die für eine Head-Up-Anzeige (HUD) geeignet ist, und eine davon getrennte Zone, welche die folgende Gleichung erfüllt, umfasst:

$$\delta = \frac{d}{R} \cdot \frac{\cos\varphi \cdot \sin\varphi}{n^2 - \sin^2\varphi}$$

worin $\delta$ der Keilwinkel ist, n der Brechungsindex des Glas ist, d die Dicke des Glases ist, R der Krümmungsradius des Glas an der Stelle des einfallenden Lichtstrahls ist und $\varphi$ der Einfallswinkel des Lichtstrahls bezüglich der Senkrechten auf die Tangente des Glases ist.

7. Steuerungssystem (20) einer Anlage zur Herstellung von Flachglas durch Floaten eines Glasbandes (8) auf einem Bad aus geschmolzenem Metall (7), vorzugsweise aus geschmolzenem Zinn, wobei das Glasband (8) entlang einer Längsbewegungsrichtung (L) von einer stromaufwärtigen Seite des Bades (3), wo das geschmolzene Glas auf das geschmolzene Metall (7) gegossen wird, bis zu einer stromabwärtigen Seite des Bades (4), wo das Glasband (8) das Bad (3) verlässt, gezogen wird, wobei das Glasband (8) durch Aufnahmewalzen (9), die stromabwärts des Bades (1) angeordnet sind, mit einer Geschwindigkeit V, die Kühlofengeschwindigkeit, gezogen wird, wobei das Glasband (8) außerdem durch eine Vielzahl von Paaren von Seitenrädern (10), die auf beiden Seiten des Bades (1) in Kontakt mit der oberen Oberfläche des Glasbandes (8) positioniert sind, quer und/oder axial gestreckt wird, wobei das Steuerungssystem (20) **dadurch gekennzeichnet ist, dass** es mindestens ein Steuermodul (21) umfasst, das dazu geeignet ist, eine temporäre Änderung mindestens eines mechanischen Parameters der Anlage zu steuern, damit eine lokale Modifikation der Dicke des Glasbandes (8) entlang der Längsrichtung (L) hervorgerufen wird.

8. Steuerungssystem (20) nach Anspruch 7, **dadurch gekennzeichnet, dass** es eine Steuerungsvorrichtung (24) für die Dicke des Glasbandes (8) auf Höhe des Bades (3) umfasst.

9. Anlage zur Herstellung von Flachglas durch Floaten, die dazu geeignet ist, ein Verfahren (S) nach einem der Ansprüche 1 und 2 zu implementieren, wobei die Anlage ein Steuerungssystem (20) nach einem der Ansprüche 7 und 8 umfasst.

10. Computerprogramm, das von einem Kommunikationsnetzwerk heruntergeladen werden kann und/oder auf einem Aufzeichnungsmedium aufgezeichnet ist und das dazu geeignet ist, von einem Computer gelesen zu werden und/oder von einem Prozessor ausgeführt zu werden, umfassend einen Code mit Anweisungen, die dazu geeignet sind, ein Steuerungssystem nach einem der Ansprüche 7 und 8 anzuweisen, ein Herstellungsverfahren nach einem der Ansprüche 1 bis 3 durchzuführen.

11. Computeraufzeichnungsmedium, auf dem ein Computerprogramm nach Anspruch 10 aufgezeichnet ist.

12. Verbundglas (14) für eine Verglasung, wobei das Verbundglas (14) eine Zwischenlage aus viskoelastischem Kunststoff (12) umfasst, die zwischen zwei Glasscheiben (11, 13) angeordnet ist, wobei mindestens eine der Glasscheiben ein keilförmiges Glas (11) ist, das heißt eine Glasscheibe mit einem keilförmigen Querschnitt nach einem der Ansprüche 4 bis 6.

13. Verbundglas (14) nach Anspruch 12, **dadurch gekennzeichnet, dass** eine der Scheiben eine Dicke von 2,1 mm aufweist, wohingegen die andere eine Dicke unter als 2,1 mm aufweist, vorzugsweise 1,8 mm, weiter bevorzugt 1,6 mm, weiter bevorzugt 1,4 mm, weiter bevorzugt 1,1 mm, weiter bevorzugt 0,7 mm.

14. Verwendung eines Verbundglases (1) nach einem der Ansprüche 12 und 13 als Verglasung für ein Land-, Wasser- oder Lufttransportfahrzeug, für Gebäude, Stadtmobiliar oder Innenausstattung, vorzugsweise als Windschutzscheibe, Seitenscheibe, Rück- oder Heckscheibe eines Kraftfahrzeugs.

**Claims**

1. A process (S) for manufacturing wedge glass (11), that is to say a glass sheet having a wedge-shaped section, suitable for being implemented in an installation for manufacturing float glass by floating a glass ribbon (8) on a bath of molten metal (7), preferably of molten tin, in which the glass ribbon (8) is drawn in a longitudinal direction of movement (L) from an upstream side of the bath (3), where molten glass is poured onto the molten metal (7), to a downstream side of the bath (4), where the glass ribbon (8) leaves the bath (3), said glass ribbon (8) being drawn at a speed V, called the lehr speed, by extractor rollers (9) placed downstream of the bath (1), said glass ribbon (8) in addition being stretched transversely and/or axially by a plurality of pairs of lateral wheels (10) positioned on either side of the bath (1) in contact with the upper surface of the glass ribbon (8), said process (S) being **characterized in that** it comprises a step of temporary variation of at least one mechanical parameter of said installation, said temporary variation introducing a local modification in the thickness of said glass ribbon (8) in its longitudinal direction.

2. The process (S) as claimed in claim 1, **characterized in that** said at least one mechanical parameter is the lehr speed V, which preferentially varies between 600 m/h and 1400 m/h, preferentially between 900 m/h and 1200 m/h.

3. The process (S) as claimed in one of claims 1 and 2, **characterized in that** said at least one mechanical parameter belongs to the group comprising:

   • the specific speed of peripheral rotation $R_x$ of at least one of said pairs of lateral wheels (10), that is to say the ratio of its peripheral speed to the lehr speed V, which preferentially varies between 0.1 and 0.2, preferentially between 0.12 and 0.15, and/or
   • the inclination of at least one of said lateral wheels (10), which preferentially varies between -5° and 30°.

4. A wedge glass (11), that is to say a glass sheet having a wedge-shaped section, suitable for being integrated into a glazing for a land, water or air transportation vehicle, for the construction industry, urban furniture or interior design, **characterized in that** it comprises oriented shadowgraph defects in its theoretical wedge section.

5. The wedge glass as claimed in claim 4, **characterized in that** it comprises a zone (HUD) suitable for a head-up display, the wedge-angle value of which zone varies linearly in its theoretical wedge section, preferably from the central position of said zone (HUD).

6. The wedge glass as claimed in one of claims 4 and 5, **characterized in that** it comprises a zone (HUD) suitable for the head-up display, and a distinct zone that respects the following equation:

$$\delta = \frac{d}{R} \cdot \frac{\cos \varphi . \sin \varphi}{n^2 - sin^2 \varphi}$$

where $\delta$ is the wedge angle, n is the refractive index of the glass, d is the thickness of the glass, R is the radius of curvature of the glass in the location of the incident light beam, and <p is the angle of incidence of the light beam with respect to the perpendicular to the tangent to the glass.

7. A system (20) for controlling an installation for manufacturing float glass by floating a glass ribbon (8) on a bath of molten metal (7), preferably of molten tin, in which the glass ribbon (8) is drawn in a longitudinal direction of movement (L) from an upstream side of the bath (3), where molten glass is poured onto the molten metal (7), to a downstream side of the bath (4), where the glass ribbon (8) leaves the bath (3), said glass ribbon (8) being drawn at a speed V, called the drawing speed, by extractor rollers (9) placed downstream of the bath (1), said glass ribbon (8) in addition being stretched transversely and/or axially by a plurality of pairs of lateral wheels (10) positioned on either side of the bath (1) in contact with the upper surface of the glass ribbon (8), said control system (20) being **characterized in that** it comprises at least one module (21) suitable for commanding a temporary variation in at least one mechanical parameter of said installation in order to introduce a local modification into the thickness of said glass ribbon (8) in said longitudinal direction (L).

8. The control system (20) as claimed in claim 7, **characterized in that** it comprises a device (24) for controlling the thickness of the glass ribbon (8) level with the bath (3).

9. An installation for manufacturing flat glass using the float process, said installation being suitable for implementing a process (S) as claimed in one of claims 1 and 2, said installation comprising a control system (20) as claimed in one of claims 7 and 8.

10. A computer program downloadable from a communication network and/or stored on a storage medium suitable for being read by a computer and/or executed by a processor, comprising a code of instructions adapted to control a system control according to of claims 7 and 8, for implementing a manufacturing process as claimed in one of claims 1 to 3.

**11.** A data storage medium, in which is stored a computer program as claimed in claim 10.

**12.** A laminated glazing (14) for a glazing unit, said laminated glazing (14) comprising a viscoelastic plastic interlayer (12) interposed between two glass sheets (11, 13), at least one of said glass sheets being a wedge glass (11), that is to say a glass sheet having a wedge-shaped section, as claimed in one of claims 4 to 6.

**13.** The laminated glazing (14) as claimed in claim 12, **characterized in that** one of said sheets has a thickness of 2.1 mm, whereas the other has a thickness smaller than 2.1 mm, preferentially of 1.8 mm, also preferentially of 1.6 mm, also preferentially of 1.4 mm, also preferentially of 1.1 mm, also preferentially of 0.7 mm.

**14.** The use of a laminated glazing (1) as claimed in one of claims 12 and 13 as glazing for a land, water or air transportation vehicle, for the construction industry, urban furniture, or interior design, preferably as motor-vehicle windshield, side window, quarter window or back window.

**Fig.1**

**Fig.2**

**Fig.3**

**Fig.4**

**Fig.5**

**Fig.6**

14

11

12

13

**Fig.7**

20

24

CAPTEUR(S)

22

Unité de
stockage

21

PROCESSEUR

23

Interface

Unité externe

25

**Fig.8**

S

- Valeur(s) mesurée(s)
- Valeur(s) seuil

S1

COMPARAISON

S2

EMISSION
INSTRUCTION

S3

COMMANDE

11

VERRE A COIN

**Fig.9**

**EP 3 746 412 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20160291324 A1
- WO 2017090561 A1
- WO 2016117650 A1
- JP 2017105665 A